# EUROPÄISCHE PATENTSCHRIFT

(11) **EP 3 361 034 B1**
(45) Veröffentlichungstag und Bekanntmachung des Hinweises auf die Patenterteilung: **13.11.2024**
(21) Anmeldenummer: 17207597.0
(22) Anmeldetag: 15.12.2017
(51) Int. Cl.: E05F 15/63, E05F 15/72

(54) **FESTSTELL- UND/ODER NOTÖFFNUNGSANLAGE**
FIXING AND/OR EMERGENCY OPENING SYSTEM
INSTALLATION D'OUVERTURE FIXE ET/OU D'OUVERTURE D'URGENCE

(30) Priorität: 08.02.2017 DE 102017201942
(43) Veröffentlichungstag der Anmeldung: 15.08.2018
(73) Patentinhaber: GEZE GmbH, 71229 Leonberg (DE)
(72) Erfinder: Hucker, Dr., Matthias, 76359 Marxzell (DE); Birkenmayer, Florian, 78224 Singen (DE)
(74) Vertreter: Witte, Weller & Partner Patentanwälte mbB

(56) Entgegenhaltungen:
- EP-A2- 1 870 552
- EP-A2- 2 287 430
- WO-A1-2016/113031
- DE-A1- 10 259 925
- DE-B3- 102015 200 284
- DE-U1- 202013 011 874

## Beschreibung

Die Erfindung betrifft eine Anlage zur Feststellung und/oder Notöffnung eines Flügels einer Tür, eines Fensters oder dergleichen, mit einem Antrieb mit wenigstens einem mechanischen Energiespeicher, der durch eine Öffnungsbewegung des Flügels aufgeladen und mit einer Schließbewegung des Flügels entladen wird, wenigstens einem Elektromotor, dessen Motorwelle mit dem Flügel in Wirkverbindung steht, und einer Steuer- und/oder Regelelektronik, über die der Elektromotor zur generatorischen Dämpfung der Flügelbewegungen ansteuerbar ist.

Antriebe oder Türschließer für bewegliche Türflügel mit einem mechanischen Energiespeicher und hydraulischer Dämpfung sind allgemein bekannt. Beim manuellen Öffnen des Türflügels wird der mechanische Energiespeicher mit potentieller Energie aufgeladen, welche den losgelassenen Türflügel wieder schließt. Der mechanische Energiespeicher kann beispielsweise eine Feder umfassen, die durch das manuelle Öffnen des Türflügels gespannt wird und sich mit dem Schlie-ßen des Türflügels wieder entspannt. Aus der EP 1 870 552 A2 ist etwa eine Schließfolgeregelung bekannt, welche Türantriebe aufweist, die zum motorischen Öffnen des jeweiligen Flügels ausgebildet sind und zur Betätigung in Schließrichtung eine Federanordnung aufweisen.

Beispielsweise aus DE 102 59 925 A1 und EP 2 287 430 A2 sind auch bereits generatorisch gedämpfte Türschließer mit wenigstens einem als Generator betriebenen Elektromotor bekannt, dessen Motorwelle mit dem Flügel in Wirkverbindung steht und dessen Motorklemmen zur Dämpfung der Flügelbewegungen über eine Steuer- oder Regelelektronik kurzgeschlossen werden können. Außer einem Gehäuse und einem Beschlag zur Verbindung zwischen Getriebe und Türflügel umfasst auch ein solcher generatorisch gedämpfter Türschließer in der Regel wieder eine als mechanischer Speicher dienende Feder.

Beim manuellen Öffnen der Tür wird die Feder gespannt, wodurch potentielle Energie in die Feder geladen wird. Gleichzeitig wird mit dem Öffnen der Tür das dem Elektromotor üblicherweise zugeordnete Getriebe gedreht. Bei dem wenigstens einen Elektromotor handelt es sich in der Regel um einen bürstenbehafteten oder bürstenlosen magnetisch erregten Gleichstrommotor. Zum einen wird damit elektrische Energie für die Steuer- oder Regelelektronik aus der Flügelbewegung erzeugt. Zum anderen kann über die Steuer- oder Regelelektronik die Bewegung des Türflügels durch Kurzschließen der Motorwicklungen gedämpft werden. Insbesondere kann über die Steuer- oder Regelelektronik nach dem Loslassen des Türflügels die durch die sich entspannende Feder verursachte Schließbewegung des Türflügels gesteuert bzw. geregelt gedämpft werden, was beispielsweise über eine Pulsweitenmodulation des Kurzschlusses in Abhängigkeit von der aktuellen Position bzw. der aktuellen Geschwindigkeit des Türflügels erfolgen kann.

Ein solcher generatorisch gedämpfter Türflügel arbeitet in der Regel wie ein bekannter hydraulisch gedämpfter Türschließer autark, d.h. er benötigt keine externe elektrische Energiequelle, weder über das Netz noch über einen Akkumulator.

Eine Feststellvorrichtung muss nach den derzeitigen Richtlinien mit elektrischer Energie nach dem Arbeitsstromprinzip die selbstschließende Eigenschaft des Türschließers aufheben. Im beispielsweise durch einen Brandmelder ausgelösten Alarmfall schaltet die Auslösevorrichtung einer Brandschaltzentrale die elektrische Energie ab, wodurch die Feststellvorrichtung auslöst und der Türflügel durch die den mechanischen Speicher bildende Feder geschlossen wird. Liegt an der Feststellvorrichtung keine elektrische Energie an, schließt die Tür nach manueller Öffnung. Das Schließen der Tür erfolgt dabei kontrolliert, d.h. gedämpft.

Ist an einer Zulufttür ein Türschließer montiert, so arbeitet dieser im Normalfall wie ein herkömmlicher Türschließer. Im Alarmfall wie bei einem Brand oder auftretendem Rauch liefert eine Rauch-Wärme-Abzugsanlage elektrische Energie, wodurch die Zulufttür entgegen der Kraft der Feder des Türschließers geöffnet wird. Das betreffende Gebäude wird hiermit dadurch mit den entsprechenden Abluftfenstern entraucht.

Dazu wird bisher zusätzlich zum hydraulischen Türschließer ein Zuluftöffner montiert, der in der Regel eine Motor-Getriebe-Einheit umfasst, die über einen Hebel oder eine Rolle den Türflügel öffnet. Zuluftöffner und Türschließer müssen dabei insoweit entkoppelt sein, dass auch bei geschlossenem Zuluftöffner der Türflügel noch manuell geöffnet werden kann. Im Brandfall liefert die Rauch- und Wärmeabzugszentrale elektrische Energie, wodurch der Zuluftöffner den Türflügel öffnet und diesen offenhält, solange das Warnsignal der Rauch- und Wärmeabzugszentrale bzw. die entsprechende elektrische Energie ansteht.

Die bisher bekannten generatorisch gedämpften Türschließer oder Antriebe können weder den Türflügel gegen die Kraft des mechanischen Speichers offenhalten, d.h. den Türflügel feststellen, noch den Türflügel gegen die Kraft des mechanischen Speichers öffnen, d.h. die Zuluftfunktion für einen Rauch- und Wärmeabzug erfüllen.

Der Erfindung liegt die Aufgabe zugrunde, eine Anlage zur Feststellung und/oder Notöffnung eines Flügels einer Tür, eines Fensters oder dergleichen anzugeben, bei der die beiden Funktionen Feststellung und Notöffnung auf möglichst einfache und entsprechend kostengünstige Weise realisiert sind.

Erfindungsgemäß wird diese Aufgabe durch eine Feststell- und/oder Notöffnungsanlage mit den Merkmalen des Anspruchs 1 gelöst. Bevorzugte Ausführungsformen der erfindungsgemäßen Anlage ergeben sich aus den Unteransprüchen, der vorliegenden Beschreibung sowie der Zeichnung.

Die erfindungsgemäße Anlage zur Feststellung und/oder Notöffnung eines Flügels einer Tür, eines Fensters oder dergleichen umfasst einen Antrieb oder Türschlie-ßer mit wenigstens einem mechanischen Energiespeicher, der durch eine Öffnungsbewegung des Flügels aufgeladen und mit einer Schließbewegung des Flügels entladen wird, wenigstens einem Elektromotor, dessen Motorwelle mit dem Flügel in Wirkverbindung steht, und einer Steuer- und/oder Regelelektronik zur Ansteuerung des Elektromotors. Dabei ist der Elektromotor über die Steuer- und/oder Regelelektronik sowohl zur generatorischen Dämpfung der Flügelbewegungen als auch entgegen der Kraft des mechanischen Speichers zur Feststellung des Flügels und/oder zur elektromotorischen Notöffnung des Flügels ansteuerbar, indem der Elektromotor zur Feststellung und/oder Notöffnung des Flügels zusätzlich mit externer elektrischer Energie aus einer externen Einrichtung versorgt wird, wobei der Elektromotor über die Steuer- und/oder Regelelektronik in Abhängigkeit von einem durch ein Ausgangssignal der externen Einrichtung gebildeten externen Steuersignal zur Feststellung und/oder Notöffnung des Flügels angesteuert und über das externe Steuersignal mit der externen elektrischen Energie versorgt wird. Der Antrieb umfasst einen elektrischen Energiespeicher, der über einen über seine Motorwelle mit dem Flügel in Wirkverbindung stehenden, als Generator betreibbaren Elektromotor aufladbar und über den die Steuer- und/oder Regelelektronik mit Energie versorgbar ist.

Aufgrund dieser Ausbildung kann der wenigstens eine zur Dämpfung der Flügelbewegungen als Generator betriebene Elektromotor eines generatorisch gedämpften Antriebs bzw. Türschließers auch zur Feststellung und Notöffnung des Flügels herangezogen werden, womit diese beiden Funktionen auf einfache Weise und entsprechend kostengünstig realisiert sind. So kann der wenigstens eine Elektromotor zum Offenhalten des Flügels beispielsweise aus einer Auslösevorrichtung und zum Öffnen der Tür im Alarmfall beispielsweise aus einer Rauch- und Wärmeabzugszentrale mit elektrischer Energie versorgt werden. Dabei kann die elektrische Energie aus dem Netz oder einem elektrischen Energiespeicher geliefert werden.

Da der Elektromotor über die Steuer- und/oder Regelelektronik in Abhängigkeit von dem durch ein Ausgangssignal der externen Einrichtung gebildeten externen Steuersignal zur Feststellung und/oder Notöffnung des Flügels angesteuert und über das externe Steuersignal mit der externen elektrischen Energie versorgt wird, wird über das betreffende externe Steuersignal somit nicht nur die jeweilige Feststell- oder Notöffnungsfunktion ausgelöst. Dieses externe Steuersignal liefert gleichzeitig auch die für den Elektromotor erforderliche zusätzliche elektrische Energie.

Der Antrieb umfasst zweckmäßigerweise einen elektrischen Energiespeicher, der über einen über seine Motorwelle mit dem Flügel in Wirkverbindung stehenden, als Generator betreibbaren Elektromotor aufladbar und über den die Steuer- und/oder Regelelektronik mit Energie versorgbar ist. Dabei kann es sich bei dem zur Aufladung des elektrischen Energiespeichers vorgesehenen, als Generator betreibbaren Elektromotor um einen auch zur Dämpfung der Flügelbewegungen und zur Feststellung und/oder Notöffnung vorgesehenen Elektromotor oder um einen getrennten Motor handeln. Grundsätzlich sind also insbesondere auch solche Ausführungen denkbar, bei denen der elektrische Energiespeicher durch den wenigstens einen sowohl zur generatorischen Dämpfung der Flügelbewegungen als auch zur Feststellung und/oder Notöffnung vorgesehenen Elektromotor aufgeladen wird.

Die Steuer- und/oder Regelelektronik umfasst einen Dämpfungskreis mit wenigstens einem über eine Steuer- und/oder Regeleinheit ansteuerbaren Schaltelement, über das die Motorklemmen des an den Dämpfungsstromkreis angeschlossenen Elektromotors zur generatorischen Dämpfung der Flügelbewegungen kurzschließbar sind.

Erfindungsgemäß umfasst die Steuer- und/oder Regelelektronik eine Umschalteinheit, die zwischen einem ersten Schaltzustand, bei dem die Motorklemmen des Elektromotors zur generatorischen Dämpfung der Flügelbewegungen mit dem Dämpfungsstromkreis verbunden sind, und einem zweiten Schaltzustand umschaltbar ist, bei dem die Motorklemmen des Elektromotors zur Feststellung des Flügels bei einer insbesondere vorgebbaren Feststellposition und/oder zur elektromotorischen Notöffnung des Flügels an eine durch die externe elektrische Energie gelieferte Spannung angelegt sind. Die Feststellposition kann beispielsweise der maximalen Öffnungsposition des Flügels entsprechen oder auch variabel vorgebbar sein. Die Umschalteinheit kann beispielsweise in dem Dämpfungsstromkreis integriert sein und diesen zur Feststellung oder Notöffnung des Flügels unterbrechen.

Von Vorteil ist insbesondere, wenn die Umschalteinheit zur Feststellung des Flügels ihren zweiten Schaltzustand annimmt, wenn der Flügel die insbesondere vorgebbare Feststellposition einnimmt und das externe Steuersignal an der Steuer- und/oder Regelelektronik anliegt.

Gemäß einer bevorzugten praktischen Ausführungsform der erfindungsgemäßen Anlage umfasst die Umschalteinheit ein Relais, über das im unbestromten Zustand die Motorklemmen des Elektromotors zur generatorischen Dämpfung der Flügelbewegungen mit dem Dämpfungsstromkreis verbindbar und über das im bestromten Zustand die Klemmen des Elektromotors zur Feststellung und/oder zur elektromotorischen Notöffnung des Flügels an eine durch die externe elektrische Energie gelieferte Spannung anlegbar sind.

Gemäß einer zweckmäßigen praktischen Ausführungsform der erfindungsgemäßen Anlage ist das externe Steuersignal der Umschalteinheit über einen Positionsschalter zuführbar, der bei die insbesondere vorgebbare Feststellposition einnehmendem Flügel schließbar ist. Von Vorteil ist insbesondere auch, wenn zur Erzeugung der zur Feststellung und/oder zur elektromotorischen Notöffnung des Flügels an den Elektromotor anzulegenden Spannung eine Pegelanpassungseinheit vorgesehen ist, über die der Pegel des externen Steuersignals an den zur Spannungsversorgung des Elektromotors erforderlichen Pegel anpassbar ist.

Eine alternative, insbesondere hinsichtlich einer Energieoptimierung vorteilhafte Ausführungsform der erfindungsgemäßen Anlage zeichnet sich dadurch aus, dass das externe Steuersignal der Umschalteinheit über eine Steuer- und/oder Regeleinheit der Steuer- und/oder Regelelektronik in Abhängigkeit vom Ausgangssignal eines die insbesondere vorgebbare Feststellposition des Flügels erfassenden Positionsgebers zuführbar ist. Dabei ist insbesondere auch von Vorteil, wenn zur Erzeugung der zur Feststellung und zur elektromotorischen Notöffnung des Flügels an den Elektromotor anzulegenden Spannung das externe Steuersignal dem Elektromotor zur Pegelanpassung über eine solche Steuer- und/oder Regeleinheit der Steuer- und/oder Regelelektronik zuführbar ist.

Gemäß einer weiteren bevorzugten praktischen Ausführungsform der erfindungsgemäßen Anlage umfasst die Umschalteinheit eine durch das externe Steuersignal beaufschlagbare H-Brücke aus elektronischen Schaltern wie insbesondere Transistoren, in der der sowohl zur generatorischen Dämpfung der Flügelbewegungen als auch zur Feststellung des Flügels und/oder zur elektromotorischen Notöffnung des Flügels ansteuerbare Elektromotor angeordnet ist und deren elektronische Schalter über eine Steuer- und/oder Regeleinheit der Steuer- und/oder Regelelektronik so ansteuerbar sind, dass der Elektromotor zur generatorischen Dämpfung der Flügelbewegungen als Generator betreibbar bzw. zur Feststellung und/oder zur elektromotorischen Notöffnung des Flügels eine durch die externe elektrische Energie gelieferte Spannung an dessen Motorklemmen anlegbar ist.

Dabei ist insbesondere von Vorteil, wenn die elektronischen Schalter der H-Brücke über die Steuer- und/oder Regeleinheit so ansteuerbar sind, dass bei seine insbesondere vorgebbare Feststellposition einnehmendem Flügel und anliegendem externem Steuersignal zur Feststellung und/oder zur elektromotorischen Notöffnung des Flügels an die Motorklemmen des Elektromotors eine durch die externe elektrische Energie gelieferte Spannung angelegt wird.

Die elektronischen Schalter der H-Brücke sind über die Steuer- und/oder Regeleinheit zur Feststellung des Flügels bevorzugt in Abhängigkeit von der Richtung des Moments des mechanischen Energiespeichers und/oder zur Notöffnung des Flügels in Abhängigkeit von der Drehrichtung des Flügels ansteuerbar.

Von Vorteil ist insbesondere auch, wenn die Umschalteinheit über die zugeordnete Steuer- und/oder Regeleinheit der Steuer- und/oder Regelelektronik zur Feststellung des Flügels so ansteuerbar ist, dass die dem Elektromotor zugeführte elektrische Energie gerade ausreicht, um die potentielle Energie des mechanischen Energiespeichers zu kompensieren.

Gemäß einer weiteren praktischen Ausführungsform der erfindungsgemäßen Anlage ist über die zur Ansteuerung der Umschalteinheit vorgesehene Steuer- und/oder Regeleinheit zur Feststellung des Flügels in der insbesondere vorgebbaren Feststellposition und/oder zum Offenhalten des Flügels nach erfolgter Notöffnung eine bistabile Feststelleinheit ansteuerbar. Dabei ist insbesondere von Vorteil, wenn die bistabile Feststelleinheit eine bistabile Bremseinheit zur Beaufschlagung der Motorwelle des Elektromotors umfasst.

Die bistabile Feststelleinheit ist bevorzugt bei einem Alarm wie insbesondere im Brandfall über die Steuer- und/oder Regeleinheit entriegelbar.

Die Feststellposition kann der maximalen Offenstellung des Flügels entsprechen oder vorteilhafterweise auch beispielsweise als Parameter über eine Inbetriebnahmeeinheit oder dergleichen variabel einstellbar sein.

Gemäß einer weiteren vorteilhaften Ausführungsform ist der Flügel zumindest oberhalb eines vorgebbaren Öffnungswinkels bei Erreichen eines jeweiligen Öffnungswinkels feststellbar. Der Flügel wird also nach einer jeweiligen Öffnungsbewegung festgestellt, sobald er angehalten wird.

Zweckmäßigerweise ist die Feststellung des Flügels in einer jeweiligen Feststellposition durch manuelle Betätigung des Flügels lösbar. Dabei kann die zum manuellen Auslösen der Feststellung benötigte Kraft parametrisierbar sein. Von Vorteil ist insbesondere auch, wenn bei einem jeweiligen Feststellwinkel, der kleiner ist als der maximale Öffnungswinkel des Flügels, der Feststellwinkel auch überfahrbar ist, so dass der Flügel insbesondere manuell aus der Feststellung gelöst und über die betreffende Feststellposition hinaus geöffnet werden kann.

Gemäß einer weiteren zweckmäßigen praktischen Ausführungsform der erfindungsgemäßen Anlage umfasst der Antrieb eine insbesondere über die externe Einrichtung mit externer elektrischer Energie versorgbare Sicherheitssensorik. Dabei ist insbesondere von Vorteil, wenn die Sicherheitssensorik wenigstens einen Sensor zur Überwachung des Bereichs in Schließrichtung vor dem Flügel auf der Bandgegenseite und/oder wenigstens einen Sensor zur Überwachung des Bereichs in Öffnungsrichtung vor dem Flügel auf der Bandseite umfasst.

Vorteilhafterweise erfolgt ein jeweiliges Auslösen einer Feststellung und/oder die Aktivierung einer jeweiligen Feststellung und/oder die Dämpfung einer jeweiligen Öffnungsbewegung des Flügels über die Steuer- und/oder Regelelektronik in Abhängigkeit von Ausgangssignalen der Sicherheitssensorik.

Gemäß einer weiteren bevorzugten Ausführungsform der erfindungsgemäßen Anlage ist bei einer zweiflügligen Tür mit einem Standflügel und einem Gangflügel insbesondere für eine elektrische Schließfolgeregelung beiden Flügeln jeweils wenigstens ein zur Feststellung des Flügels bei einer insbesondere vorgebbaren Feststellposition und/oder zur elektromotorischen Notöffnung des Flügels ansteuerbarer Elektromotor zugeordnet. Bevorzugt ist zumindest dem Gangflügel insbesondere über die externe Einrichtung externe elektrische Energie zuführbar.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform einer erfindungsgemäßen Anlage zur Feststellung eines Flügels einer Tür oder dergleichen mit einem generatorisch gedämpften Antrieb oder Türschließer, der mit einer ein Relais umfassenden Umschalteinheit versehen ist,
- Fig. 2: eine schematische Darstellung einer weiteren beispielhaften Ausführungsform einer erfindungsgemäßen Anlage zur Feststellung eines Flügels einer Tür oder dergleichen mit einem ein Relais umfassenden generatorisch gedämpften Antrieb oder Türschließer,
- Fig. 3: eine schematische Teildarstellung einer beispielhaften Ausführungsform einer erfindungsgemäßen Anlage zur Feststellung eines Flügels einer Tür oder dergleichen mit einem generatorisch gedämpften Antrieb oder Türschließer, der mit einer eine H-Brücke aus elektronischen Schaltern umfassenden Umschalteinheit versehen ist, und
- Fig. 4: eine schematische Darstellung einer beispielhaften Ausführungsform einer erfindungsgemäßen Anlage zur Notöffnung eines Flügels einer Tür oder dergleichen mit einem eine HBrücke aus elektronischen Schaltern umfassenden generatorisch gedämpften Antrieb oder Türschließer.

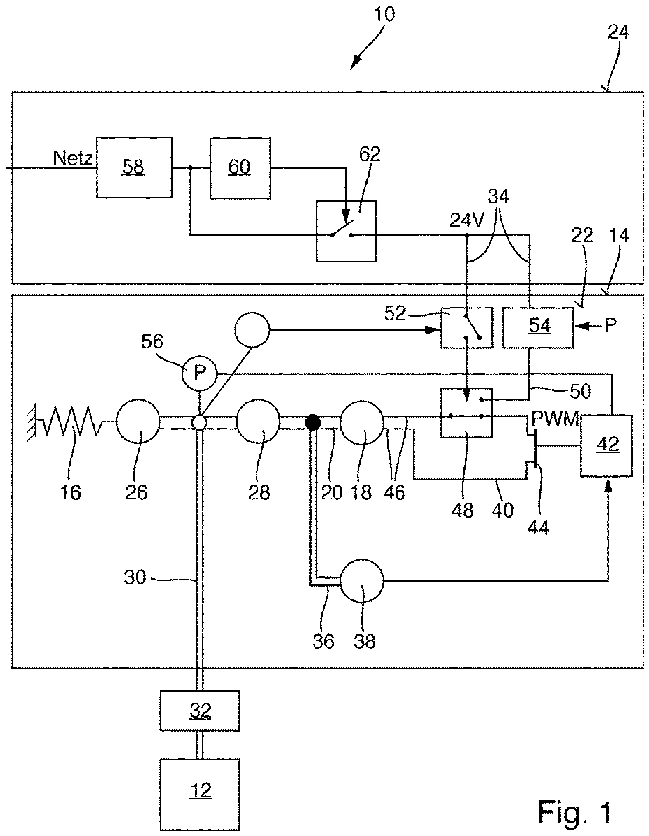

Fig. 1 zeigt in schematischer Darstellung eine Anlage 10 zur Feststellung eines Flügels einer Tür, im vorliegenden Fall beispielsweise eines Drehflügels. Bei dem Flügel kann es sich auch um einen Fensterflügel oder dergleichen handeln.

Die Feststellanlage 10 umfasst einen Antrieb 14, der hier beispielsweise als Türschließer ausgeführt ist. Der Antrieb 14 umfasst einen insbesondere eine Feder umfassenden mechanischen Speicher 16, der durch eine Öffnungsbewegung des Flügels 12 aufgeladen und mit einer Schließbewegung des Flügels 12 entladen wird, einen Elektromotor 18, dessen Motorwelle 20 mit dem Flügel 12 in Wirkverbindung steht, und eine Steuer- und/oder Regelelektronik 22 zur Ansteuerung des Elektromotors 18.

Dabei ist der Elektromotor 18 über die Steuer- und/oder Regelelektronik 22 sowohl zur generatorischen Dämpfung der Flügelbewegungen als auch entgegen der Kraft des mechanischen Speichers 16 zur Feststellung des Flügels 12 ansteuerbar, indem der Elektromotor 18 zur Feststellung des Flügels zusätzlich mit einer externen elektrischen Energie aus einer externen Einrichtung 24 versorgbar ist, bei der es sich im vorliegenden Fall beispielsweise um eine Rauchschaltzentrale handelt.

Der mechanische Energiespeicher 16 und der Elektromotor 18 können jeweils über ein Getriebe 26 bzw. 28 mit einer Abtriebswelle 30 des Antriebs 14 verbunden sein, die wiederum über einen Beschlag mit dem Flügel 12 gekoppelt ist.

Der Elektromotor 18 ist über die Steuer- und/oder Regelelektronik 22 in Abhängigkeit von einem durch ein Ausgangssignal der externen Einrichtung 24 gebildeten externen Steuersignal 34 zur Feststellung des Flügels 12 ansteuerbar. Dabei kann der Elektromotor 18 zur Feststellung des Flügels 12 beispielsweise über dieses externe Steuersignal 34 auch mit der externen elektrischen Energie versorgbar sein.

Zudem umfasst der Antrieb 14 einen elektrischen Energiespeicher, der über einen über seine Motorwelle 36 mit dem Flügel 12 in Wirkverbindung stehenden, als Generator betreibbaren Elektromotor 38 aufladbar und über den die Steuer- und/oder Regelelektronik 22 mit Energie versorgbar ist.

Die Steuer- und/oder Regelelektronik 22 umfasst einen Dämpfungskreis 40 mit wenigstens einem über eine Steuer- und/oder Regeleinheit 42 ansteuerbaren Schaltelement 44, über das die Motorklemmen 46 des an den Dämpfungsstromkreis 40 angeschlossenen Elektromotors 18 zur generatorischen Dämpfung der Flügelbewegungen kurzschließbar sind.

Die Steuer- und/oder Regelelektronik 22 umfasst eine Umschalteinheit 48, die zwischen einem ersten Schaltzustand, bei dem die Motorklemmen 46 des Elektromotors 18 zur generatorischen Dämpfung der Flügelbewegungen mit dem Dämpfungsstromkreis 40 verbunden sind, und einem zweiten Schaltzustand umschaltbar ist, bei dem die Motorklemmen 46 des Elektromotors 18 zur Feststellung des Flügels 12 bei einer insbesondere vorgebbaren Feststellposition an eine durch die externe elektrische Energie gelieferte Spannung 50 angelegt sind. Im vorliegenden Fall nimmt die Umschalteinheit 48 zur Feststellung des Flügels 12 ihren zweiten Schaltzustand an, wenn der Flügel 12 die insbesondere vorgebbare Feststellposition einnimmt und das externe Steuersignal 34 an der Steuer- und/oder Regelelektronik 22 anliegt.

Wie aus der Fig. 1 ersichtlich, kann die Umschalteinheit 48 beispielsweise ein Relais umfassen, das im vorliegenden Fall in den Dämpfungsstromkreis 40 geschaltet ist. Über dieses Relais wird im unbestromten Zustand der Dämpfungsstromkreis 40 geschlossen bzw. die Motorklemmen 46 des Elektromotors 18 zur generatorischen Dämpfung der Flügelbewegungen mit dem Dämpfungsstromkreis 40 verbunden, während über dieses Relais im bestromten Zustand die Klemmen 46 des Elektromotors 18 zur Feststellung des Flügels 12 an die durch die externe elektrische Energie gelieferte Spannung 50 angelegt werden.

Im vorliegenden Fall ist das externe Steuersignal 34 der Umschalteinheit 48 über einen Positionsschalter 52 zuführbar, der bei die insbesondere vorgebbare Feststellposition einnehmendem Flügel 12 schließbar ist. Zudem ist im vorliegenden Fall zur Erzeugung der zur Feststellung des Flügels 12 an den Elektromotor 18 anzulegenden Spannung 15 eine Pegelanpassungseinheit 54 vorgesehen, über die der Pegel des externen Steuersignals 34 an den zur Spannungsversorgung des Elektromotors 18 erforderlichen Pegel anpassbar ist.

Wie aus der Fig. 1 zudem ersichtlich ist, kann die Steuer- und/oder Regeleinheit 42 mit einem Messkreis wie beispielsweise einem Positionsgeber 56 oder dergleichen verbunden sein, über den die Position, Schwenkrichtung, Schwenkgeschwindigkeit und/oder dergleichen des Flügels 12 erfasst wird.

Die im vorliegenden Fall beispielsweise als Rauchschaltzentrale vorgesehene externe Einrichtung 24 kann beispielsweise ein an das Netz angeschlossenes Netzteil 58, wenigstens einen Brandmelder 60 sowie eine Auslösevorrichtung 62 umfassen. Die externe Einrichtung 24 kann in einem eigenen Gehäuse untergebracht oder im Antrieb bzw. Türschließer 14 integriert sein.

Im unbestromten Zustand schließt die im vorliegenden Fall ein Relais umfassende Umschalteinheit 48 den Dämpfungsstromkreis 40, d.h. die Motorklemmen 46 des Elektromotors 18 werden an den Dämpfungsstromkreis 40 angeschlossen. Der Antrieb 14 arbeitet somit als generatorisch gedämpfter Antrieb bzw. generatorisch gedämpfter Türschließer. Die Ausgangsspannung der externen Einrichtung 24 bzw. der Rauchschaltzentrale liegt über den Positionsschalter 52 an der Spule des Relais der Umschalteinheit 48 an. Der Positionsschalter 52 schließt seinen Kontakt, sobald der Flügel 12 vollständig geöffnet ist, wobei im vorliegenden Fall beispielsweise die maximale Offenstellung des Flügels 12 die Feststellposition bildet. Grundsätzlich ist jedoch auch eine solche Ausführung denkbar, bei der die Feststellposition variabel vorgebbar ist.

Liefert die externe Einrichtung 24 bzw. Rauchschaltzentrale beispielsweise im Fall eines Alarms keine Spannung oder ist der Flügel 12 nicht vollständig geöffnet, so zieht das Relais der Umschalteinheit 48 nicht an. Nach einem jeweiligen Öffnen schließt der Flügel 12 generatorisch gedämpft. Zum Öffnen muss die Feder des mechanischen Speichers 16 gespannt werden.

Ist der Flügel 12 in der Feststellposition und liefert die externe Einrichtung 24 bzw. Rauchschaltzentrale Spannung, so zieht das Relais der Umschalteinheit 48 an und verbindet den Elektromotor 18 mit Spannung. Der Flügel 12 wird im vorliegenden Fall gegen die Offenlage gedrückt. Über die Pegelanpassungseinheit 54 wird das Öffnungsmoment des Elektromotors 18 eingestellt.

Der Flügel 12 kann bei dieser Ausführungsform auch manuell ausgelöst werden, indem er gegen das Öffnungsmoment des Elektromotors 18 manuell zugedrückt wird. Sobald der Positionsschalter 52 die Verbindung unterbricht, schließt der Flügel generatorisch gedämpft. Dazu kann die Steuer- und/oder Regeleinheit 42 über das beispielsweise einen Feldeffekttransistor umfassende Schaltelement 44 z. B. eine Pulsweitenmodulation des Motorstroms des Elektromotors 18 durchführen, um eine wirksame Dämpfungskraft zur Dämpfung der Flügelbewegungen einzustellen. Die Dämpfung der Flügelbewegungen kann beispielsweise in Abhängigkeit von einer aktuellen Bewegungsrichtung und/oder einer aktuellen Geschwindigkeit und/oder eines aktuellen Öffnungswinkels des Flügels 12 eingestellt werden. Im Übrigen kann die Dämpfung der Flügelbewegungen insbesondere so erfolgen, wie dies in der DE 10 2015 200 284 B3 beschrieben ist, deren Offenbarungsgehalt hier mit einbezogen wird.

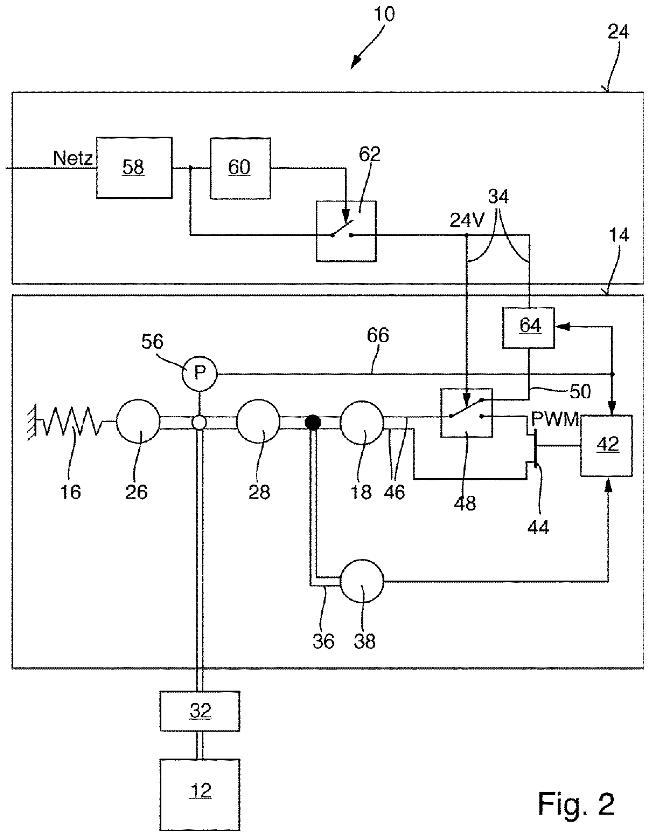

Fig. 2 zeigt in schematischer Darstellung eine weitere beispielhafte Ausführungsform einer erfindungsgemäßen Anlage 10 zur Feststellung eines Flügels 12 einer Tür oder dergleichen mit einem ein Relais umfassenden generatorisch gedämpften Antrieb 14 bzw. Türschließer. Im vorliegenden Fall ist das externe Steuersignal 34 der ein Relais umfassenden Umschalteinheit 48 über eine weitere Steuer- und/oder Regeleinheit 64 der Steuer- und/oder Regelelektronik 22 in Abhängigkeit vom Ausgangssignal 66 des die Feststellposition des Flügels 12 erfassenden Positionsgebers 56 zuführbar. Dabei erfolgt im vorliegenden Fall zur Erzeugung der über das Relais der Umschalteinheit 48 dem Elektromotor 18 zur Feststellung des Flügels 12 zuzuführenden Spannung durch diese weitere Steuer- und/oder Regeleinheit 64 eine Pegelanpassung.

Die vorliegende Ausführungsform unterscheidet sich von der Fig. 1 somit zumindest im Wesentlichen dadurch, dass der Positionsschalter und die Pegelanpassung durch die intelligente Steuer- und/oder Regeleinheit 64 ersetzt werden. Die Funktionen entsprechen einander zumindest im Wesentlichen. Die Steuer- und/oder Regeleinheit 64 erfasst das Signal des Positionsgebers 56 und bestromt das Relais der Umschalteinheit 48 nur dann, wenn sich der Flügel 12 in der Feststellposition befindet und die Auslösevorrichtung 62 der externen Einrichtung 24 bzw. Rauchschaltzentrale Energie liefert, d.h. ein Alarm vorliegt.

Mittels der Steuer- und/oder Regeleinheit 64 ist es nunmehr beispielsweise möglich, die dem Elektromotor 18 zugeführte elektrische Energie so einzustellen, dass diese gerade ausreicht, die potentielle Energie der Feder des mechanischen Energiespeichers 16 zu kompensieren. Dies kann beispielsweise durch eine Lageregelung auf der Basis des Signals des Positionsgebers 56, durch Lernen der benötigten Halteenergie beim Auslösen und/oder dergleichen erfolgen.

Damit ist eine Energie sparende Ausführung der Feststellung realisierbar, die sich zudem mit minimaler Kraft manuell auslösen lässt.

Die externe Einrichtung 24 bzw. Rauchschaltzentrale kann auch hier wieder in einem eigenen Gehäuse angeordnet oder im Gehäuse des Antriebs 14 oder Türschließers montiert sein.

Auch im Übrigen besitzt diese Ausführungsform zumindest im Wesentlichen wieder den gleichen Aufbau wie die der Fig. 1, wobei einander entsprechenden Teilen gleiche Bezugszeichen zugeordnet sind.

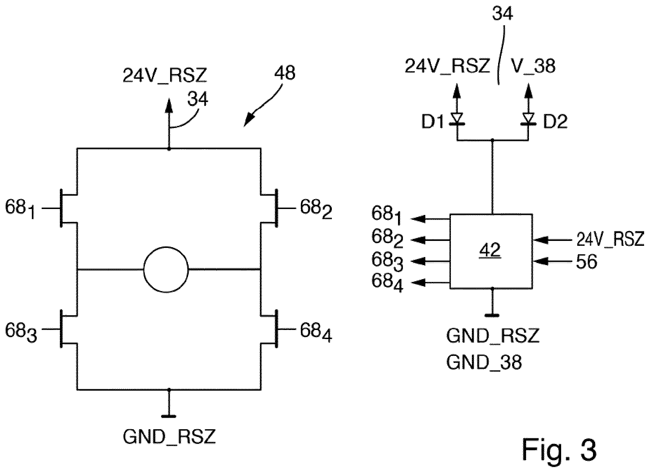

Fig. 3 zeigt in schematischer Teildarstellung eine weitere beispielhafte Ausführungsform einer erfindungsgemäßen Anlage 10 zur Feststellung eines Flügels 12 einer Tür oder dergleichen, wobei lediglich der Bereich der Umschalteinheit 48 dargestellt ist.

Im vorliegenden Fall umfasst die Umschalteinheit 48 eine durch das externe Steuersignal 34 beaufschlagbare H-Brücke aus elektronischen Schaltern 68 wie insbesondere Transistoren, in der der sowohl zur generatorischen Dämpfung der Flügelbewegungen als auch zur Feststellung des Flügels 12 ansteuerbare Elektromotor 18 angeordnet ist. Dabei sind die elektronischen Schalter 68 dieser H-Brücke der Umschalteinheit 48 über die Steuer- und/oder Regeleinheit 42 der Steuer- und/oder Regelelektronik 22 so ansteuerbar, dass der Elektromotor 18 (vgl. auch nochmals Fig. 2) zur generatorischen Dämpfung der Flügelbewegungen als Generator betreibbar bzw. zur Feststellung des Flügels 12 eine durch die externe elektrische Energie gelieferte Spannung an dessen Motorklemmen 46 anlegbar ist.

Dabei sind die elektronischen Schalter 68 der H-Brücke der Umschalteinheit 48 über die Steuer- und/oder Regeleinheit 42 insbesondere so ansteuerbar, dass bei seine insbesondere vorgebbare Feststellposition einnehmendem Flügel 12 und anliegendem externem Steuersignal 34 zur Feststellung des Flügels 12 an die Motorklemmen 46 des Elektromotors 18 (vgl. auch nochmals Fig. 2) eine durch die externe elektrische Energie gelieferte Spannung angelegt wird. Die elektronischen Schalter 68 der H-Brücke können über die Steuer- und/oder Regeleinheit 42 zur Feststellung des Flügels 12 insbesondere in Abhängigkeit von der Richtung des Moments des mechanischen Energiespeichers 16 ansteuerbar sein.

Im vorliegenden Fall übernimmt somit die Steuer- und/oder Regeleinheit 42 des generatorisch gedämpften Antriebs 14 oder Türschließers auch die Feststellung des Flügels 12 (vgl. auch nochmals Fig. 2). Dabei ist in der Fig. 3 lediglich der entsprechend abgewandelte Abschnitt der Ausführung gemäß Fig. 2 dargestellt. Über die Steuer- und/oder Regeleinheit 42 kann jeder der elektronischen Schalter 68₁ bis 68₄ getrennt angesteuert werden.

Befindet sich der Flügel 12 nicht in der Feststellposition, was über den Positionsgeber 56 signalisierbar ist, oder liefert die externe Einrichtung 24 bzw. Rauchschaltzentrale (vgl. auch nochmals Fig. 2) nicht die geforderte Spannung von beispielsweise 24 V (Signal "24V-RSZ"), so erkennt dies die Steuer- und/oder Regeleinheit 42 anhand dieser beiden Signale. Nach einer manuellen Öffnung schließt der Flügel 12 generatorisch gedämpft. Die Steuer- und/oder Regeleinheit 42 öffnet dazu die elektronischen Schalter 68₁ und 68₂ und dämpft die Schließbewegung des Flügels 12 beispielsweise durch einen pulsweitenmodulierten Kurzschluss des Elektromotors 18 über die elektronischen Schalter 68₃ und 68₄. Die Steuer- und/oder Regeleinheit 42 wird dabei entweder aus dem als Generator arbeitenden Elektromotor 38 (vgl. auch nochmals Fig. 2) oder der von der externen Einrichtung 24 bzw. Rauchschaltzentrale gelieferten Spannung 24V-RSZ versorgt.

Liefert die externe Einrichtung 24 bzw. Rauchschaltzentrale die geforderte Spannung von beispielsweise 24 V und nimmt der Flügel 12 seine Feststellposition ein, so erkennt dies die Steuer- und/oder Regeleinheit 42, die daraufhin den Flügel 12 durch eine Ansteuerung der beiden elektronischen Schalter 68₁ und 68₄ bzw. 68₂ und 68₃ in Abhängigkeit von der Richtung des Federmoments entgegen der Kraft der Feder des mechanischen Energiespeichers 16 hält bzw. feststellt. Über eine beispielsweise pulsweitenmodulierte Ansteuerung der beiden Transistoren und eine Auswertung des Ausgangssignals des Positionsgebers 56 wird wie bei der Ausführungsform gemäß Fig. 2 eine Optimierung des Energieverbrauchs erreicht. Die Versorgung der Steuer- und/oder Regeleinheit 42 kann jetzt aus der externen Einrichtung 24 bzw. Rauchschaltzentrale erfolgen (24V-RSZ).

Im Übrigen kann diese Ausführungsform gemäß Fig. 3 zumindest im Wesentlichen wieder denselben Aufbau wie die der Fig. 2 besitzen.

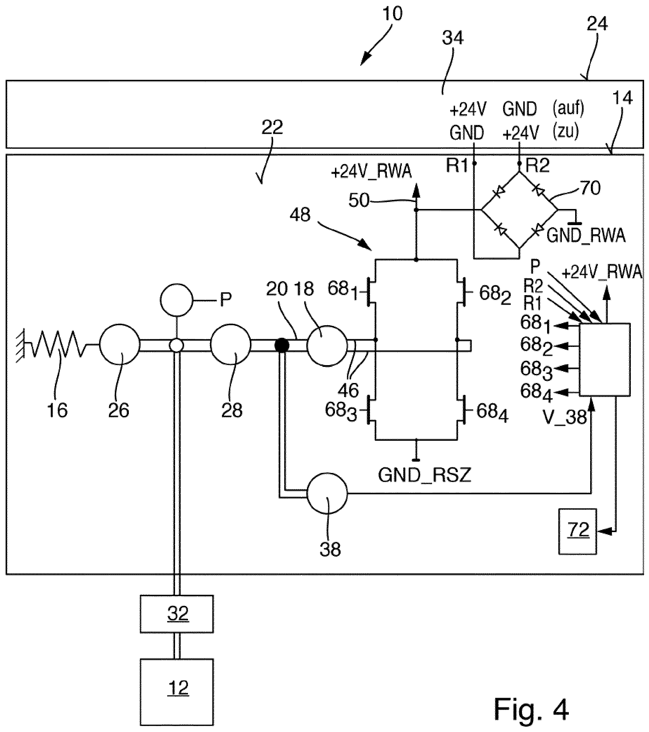

Fig. 4 zeigt in schematischer Darstellung eine beispielhafte Ausführungsform einer erfindungsgemäßen Anlage 10 zur Notöffnung eines Flügels 12 einer Tür oder dergleichen, bei der die Steuer- und/oder Regelelektronik 22 des Antriebs 14 oder Türschließers eine Umschalteinheit 48 umfasst, die zwischen einem ersten Schaltzustand, bei dem die Motorklemmen 46 des Elektromotors 18 zur generatorischen Dämpfung der Flügelbewegungen mit dem Dämpfungsstromkreis 40 verbunden sind, und einem zweiten Schaltzustand umschaltbar ist, bei dem die Motorklemmen 46 des Elektromotors 18 zur elektromotorischen Notöffnung des Flügels 12 an eine durch die externe elektrische Energie gelieferte Spannung 50 aus einer externen Einrichtung 24 angelegt sind, die hier beispielsweise eine Rauch- und Wärmeabzugszentrale ist.

Die Umschalteinheit 48 umfasst im vorliegenden Fall eine durch das externe Steuersignal 34 beaufschlagbare H-Brücke aus elektronischen Schaltern 68 wie insbesondere Transistoren, in der der sowohl zur generatorischen Dämpfung der Flügelbewegungen als auch zur elektromotorischen Notöffnung des Flügels 12 ansteuerbare Elektromotor 18 angeordnet ist. Die elektronischen Schalter 18 sind über die Steuer- und/oder Regeleinheit 42 der Steuer- und/oder Regelelektronik 22 im vorliegenden Fall so ansteuerbar, dass der Elektromotor 18 zur generatorischen Dämpfung der Flügelbewegungen als Generator betreibbar bzw. zur elektromotorischen Notöffnung des Flügels 12 eine durch die externe elektrische Energie gelieferte Spannung an dessen Motorklemmen 46 anlegbar ist. Dabei kann die Ansteuerung der elektronischen Schalter 68 der H-Brücke zur Notöffnung des Flügels 12 insbesondere in Abhängigkeit von der Drehrichtung des Flügels 12 erfolgen.

Wie anhand der Fig. 4 zu erkennen ist, kann das durch das Ausgangssignal der externen Einrichtung 24 bzw. RWA-(Rauch- und Wärmeabzug-)Zentrale gebildete externe Ausgangssignal 34 der die H-Brücke umfassenden Umschalteinheit 48 über eine Gleichrichter- oder Dioden-Brücke 70 zugeführt werden.

Im Normalfall, d.h. bei fehlendem Alarm liegt an der Motorlinie keine Spannung (R1 = 0, R2 = 0). Die Steuer- und/oder Regeleinheit 42 steuert in diesem Fall die H-Brücke der Umschalteinheit 48 zur generatorischen Dämpfung des Antriebs 14 oder Türschließers an. Die Steuer- und/oder Regeleinheit 42 sperrt die elektronischen Schalter 68₁ und 68₂ der den Elektromotor 18 enthaltenden H-Brücke und dämpft damit das Schließen des Flügels 12 beispielsweise durch einen pulsweitenmodulierten Kurzschluss der elektronischen Schalter 68₁ und 68₄.

Im Alarmfall legt die externe Einrichtung 24 bzw. RWA-Zentrale ein externes Steuersignal 34, hier beispielsweise 24V, an die Motorlinie an (R1 = 24V, R2 = GND), um den Flügel 12 zu öffnen. Die Steuer- und/oder Regeleinheit 42 wird nun aus der Motorlinie versorgt (24V-RWA). Die Steuer- und/oder Regeleinheit 42 entnimmt den Befehl "Öffnen" aus den Signalen R1 und R2 und öffnet den Flügel 12 mit generatorischer Dämpfung, indem der Elektromotor 18 durch eine entsprechende Ansteuerung der elektronischen Schalter 68₁ und 68₄ bzw. 68₂ beispielsweise pulsweitenmoduliert sowie in Abhängigkeit von dem Ausgangssignal des Positionsgebers 56 in Abhängigkeit von der Drehrichtung des Flügels 12 entsprechend geregelt wird. Ist der Flügel 12 offen, bestromt die Steuer- und/oder Regeleinheit 42 eine bistabile Feststelleinheit 72, die beispielsweise eine bistabile Bremseinheit zur Beaufschlagung der Motorwelle 20 des Elektromotors 18 umfassen kann. Der Flügel 12 bleibt jetzt entgegen der Kraft des im vorliegenden Fall beispielsweise eine Feder umfassenden mechanischen Energiespeichers 16 in der Offenlage, ohne dass die externe Einrichtung 24 bzw. RWA-Zentrale Energie liefern muss.

Nach einem Alarm-Reset will die externe Einrichtung 24 bzw. RWA-Zentrale den Flügel 12 schließen. Dazu polt die Motorlinie die Spannung um (R1 = GND, R2 = 24V). Dies erkennt die Steuer- und/oder Regeleinheit 42 aus den Signalen R1 und R2. Die Steuer- und/oder Regeleinheit 42 wird auch jetzt aus der externen Einrichtung 24 bzw. RWA-Zentrale mit elektrischer Energie versorgt, was über die Dioden- oder Gleichrichterbrücke 70 erfolgt. Die Steuer- und/oder Regeleinheit 42 entriegelt die bistabile Feststelleinheit 72 über einen kurzen Impuls, woraufhin der Flügel 12 generatorisch gedämpft wie nach einer manuellen Öffnung schließt, indem beispielsweise die elektronischen Schalter 68₁ und 68₂ gesperrt werden und über die elektronischen Schalter 68₃ und 68₄ ein insbesondere pulsweitenmodulierter Kurzschluss der Motorklemmen 46 des Elektromotors 18 erzeugt wird.

Im Übrigen kann diese Ausführungsform gemäß Fig. 4 zumindest im Wesentlichen wieder so ausgeführt sein, wie die der Fig. 2. Einander entsprechenden Teilen sind gleiche Bezugszeichen zugeordnet.

Es sind auch beliebige Kombinationen der zuvor beschriebenen beispielhaften Ausführungsformen denkbar.

Die zuvor genannte Feststellposition kann beispielsweise durch die maximale Offenstellung des Flügels 12 vorgegeben oder als Parameter über eine Inbetriebnahmeeinheit oder dergleichen variabel einstellbar sein.

Es sind beispielsweise auch solche Ausführungen denkbar, bei denen der Flügel 12 zumindest oberhalb eines vorgebbaren Öffnungswinkels bei Erreichen eines jeweiligen Öffnungswinkels feststellbar ist.

Die Feststellung des Flügels 12 kann in einer jeweiligen Feststellposition durch manuelle Betätigung des Flügels 12 lösbar sein. Dabei kann die zum manuellen Auslösen der Feststellung benötigte Kraft beispielsweise parametrisierbar sein.

Es sind insbesondere auch solche Ausführungen denkbar, bei denen bei einem jeweiligen Feststellwinkel, der kleiner ist als der maximale Öffnungswinkel des Flügels 12, der Feststellwinkel auch überfahrbar ist, so dass der Flügel 12 insbesondere manuell aus der Feststellung gelöst und über die betreffende Feststellposition hinaus geöffnet werden kann.

Der jeweilige Antrieb 14 kann auch eine insbesondere über die externe Einrichtung 24 mit externer elektrischer Energie versorgbare Sicherheitssensorik umfassen. Eine solche Sicherheitssensorik kann insbesondere wenigstens einen Sensor zur Überwachung des Bereichs in Schließrichtung vor dem Flügel 12 auf der Bandgegenseite und/oder wenigstens einen Sensor zur Überwachung des Bereichs in Öffnungsrichtung vor dem Flügel 12 auf der Bandseite umfassen.

Dabei sind insbesondere auch solche Ausführungen denkbar, bei denen ein jeweiliges Auslösen einer Feststellung und/oder die Aktivierung einer jeweiligen Feststellung und/oder die Dämpfung einer jeweiligen Öffnungsbewegung des Flügels 12 über die Steuer- und/oder Regelelektronik 22 in Abhängigkeit von Ausgangssignalen der Sicherheitssensorik erfolgt.

Bei einer zweiflügligen Tür mit einem Standflügel und einem Gangflügel kann insbesondere für eine elektrische Schließfolgeregelung auch beiden Flügeln 12 jeweils wenigstens ein zur Feststellung des Flügels 12 bei einer insbesondere vorgebbaren Feststellposition und/oder zur elektromotorischen Notöffnung des Flügels 12 ansteuerbarer Elektromotor 18 zugeordnet sein. In diesem Fall kann zumindest dem Gangflügel insbesondere über die externe Einrichtung 24 externe elektrische Energie zuführbar sein.

### Bezugszeichenliste

- 10: Anlage
- 12: Flügel
- 14: Antrieb
- 16: mechanischer Energiespeicher
- 18: Elektromotor
- 20: Motorwelle
- 22: Steuer- und/oder Regelelektronik
- 24: externe Einrichtung
- 26: Getriebe
- 28: Getriebe
- 30: Abtriebswelle
- 32: Beschlag
- 34: externes Steuersignal
- 36: Motorwelle
- 38: Elektromotor
- 40: Dämpfungsstromkreis
- 42: Steuer- und/oder Regeleinheit
- 44: Schaltelement
- 46: Motorklemmen
- 48: Umschalteinheit
- 50: Spannung
- 52: Positionsschalter
- 54: Pegelanpassungseinheit
- 56: Positionsgeber
- 58: Netzteil
- 60: Brandmelder
- 62: Auslösevorrichtung
- 64: Steuer- und/oder Regeleinheit
- 66: Ausgangssignal
- 68: elektronischer Schalter
- 70: Gleichrichter-Brücke
- 72: bistabile Feststelleinheit

## Patentansprüche

1. Anlage zur Feststellung und/oder Notöffnung eines Flügels (12) einer Tür, eines Fensters oder dergleichen, mit einem Antrieb (14) mit wenigstens einem mechanischen Energiespeicher (16), der durch eine Öffnungsbewegung des Flügels (12) aufgeladen und mit einer Schließbewegung des Flügels (12) entladen wird, wenigstens einem Elektromotor (18), dessen Motorwelle (20) mit dem Flügel (12) in Wirkverbindung steht, und einer Steuer- und/oder Regelelektronik (22) zur Ansteuerung des Elektromotors (18), wobei der Elektromotor (18) über die Steuer- und/oder Regelelektronik (22) sowohl zur generatorischen Dämpfung der Flügelbewegungen als auch entgegen der Kraft des mechanischen Speichers (16) zur Feststellung des Flügels (12) und/oder zur elektromotorischen Notöffnung des Flügels ansteuerbar ist, indem der Elektromotor (18) zur Feststellung und/oder Notöffnung des Flügels zusätzlich mit externer elektrischer Energie aus einer externen Einrichtung (24), wie insbesondere einer Rauchschaltzentrale, einer Rauch- und Wärmeabzugszentrale oder dergleichen, versorgbar ist, und wobei der Antrieb (14) einen elektrischen Energiespeicher umfasst, der über einen über seine Motorwelle (36) mit dem Flügel (12) in Wirkverbindung stehenden, als Generator betreibbaren Elektromotor (38) aufladbar und über den die Steuer- und/oder Regelelektronik (22) mit Energie versorgbar ist; wobei die Steuer- und/oder Regelelektronik (22) einen Dämpfungskreis (40) mit wenigstens einem über eine Steuer- und/oder Regeleinheit (42) ansteuerbaren Schaltelement (44) umfasst, über das die Motorklemmen (46) des an den Dämpfungsstromkreis (40) angeschlossenen Elektromotors (18) zur generatorischen Dämpfung der Flügelbewegungen kurzschließbar sind;
**dadurch gekennzeichnet, dass** der Elektromotor (18) über die Steuer- und/oder Regelelektronik (22) in Abhängigkeit von einem durch ein Ausgangssignal der externen Einrichtung (24) gebildeten externen Steuersignal (34) zur Feststellung und/oder Notöffnung des Flügels (12) angesteuert und über das externe Steuersignal (34) mit der externen elektrischen Energie versorgt wird,
und dass
die Steuer- und/oder Regelelektronik (22) eine Umschalteinheit (48) umfasst, die zwischen einem ersten Schaltzustand, bei dem die Motorklemmen (46) des Elektromotors (18) zur generatorischen Dämpfung der Flügelbewegungen mit dem Dämpfungsstromkreis (40) verbunden sind, und einem zweiten Schaltzustand umschaltbar ist, bei dem die Motorklemmen (46) des Elektromotors (18) zur Feststellung des Flügels (12) bei einer insbesondere vorgebaren Feststellposition und/oder zur elektromotorischen Notöffnung des Flügels (12) an eine durch die externe elektrische Energie gelieferte Spannung (50) angelegt sind.

2. Anlage nach Anspruch 1,
**dadurch gekennzeichnet, dass** der Elektromotor (18) zur Feststellung und/oder zur elektromotorischen Notöffnung des Flügels (12) ein bürstenloser Gleichstrommotor ist, wodurch der Flügel (12) durch das Aufbringen einer elektrischen Spannung an mindestens einer Motorwicklung bereits feststellbar ist.

3. Anlage nach Anspruch 1,
**dadurch gekennzeichnet, dass** die Umschalteinheit (48) zur Feststellung des Flügels (12) ihren zweiten Schaltzustand annimmt, wenn der Flügel (12) die insbesondere vorgebbare Feststellposition einnimmt und das externe Steuersignal (34) an der Steuer- und/oder Regelelektronik (22) anliegt.

4. Anlage nach zumindest einem der vorstehenden Ansprüche,
**dadurch gekennzeichnet, dass** die Umschalteinheit (48) ein Relais umfasst, über das im unbestromten Zustand die Motorklemmen (46) des Elektromotors (18) zur generatorischen Dämpfung der Flügelbewegungen mit dem Dämpfungsstromkreis (40) verbindbar und über das im bestromten Zustand die Klemmen (46) des Elektromotors (18) zur Feststellung und/oder zur elektromotorischen Notöffnung des Flügels (12) an eine durch die externe elektrische Energie gelieferte Spannung (50) anlegbar sind.

5. Anlage nach zumindest einem der vorstehenden Ansprüche,
**dadurch gekennzeichnet, dass** das externe Steuersignal (34) der Umschalteinheit (48) über einen Positionsschalter (52) zuführbar ist, der bei die insbesondere vorgebbare Feststellposition einnehmendem Flügel (12) schließbar ist, und/oder zur Erzeugung der zur Feststellung und/oder zur elektromotorischen Notöffnung des Flügels (12) an den Elektromotor (18) anzulegenden Spannung (50) eine Pegelanpassungseinheit (54) vorgesehen ist, über die der Pegel des externen Steuersignals (34) an den zur Spannungsversorgung des Elektromotors (18) erforderlichen Pegels anpassbar ist.

6. Anlage nach einem der Ansprüche 1 bis 4,
**dadurch gekennzeichnet, dass** das externe Steuersignal (34) der Umschalteinheit (48) über eine Steuer- und/oder Regeleinheit (64) der Steuer- und/oder Regelelektronik (22) in Abhängigkeit vom Ausgangssignal (66) eines die insbesondere vorgebare Feststellposition des Flügels (12) erfassenden Positionsgebers (56) zuführbar ist, und/oder zur Erzeugung der zur Feststellung und/oder zur elektromotorischen Notöffnung des Flügels (12) an den Elektromotor (18) anzulegenden Spannung das externe Steuersignal (34) dem Elektromotor (18) zur Pegelanpassung über eine solche Steuer- und/oder Regeleinheit (64) der Steuer- und/oder Regelelektronik (22) zuführbar ist.

7. Anlage nach zumindest einem der vorstehenden Ansprüche,
**dadurch gekennzeichnet, dass** die Umschalteinheit (48) eine durch das externe Steuersignal (34) beaufschlagbare H-Brücke aus elektronischen Schaltern (68) wie insbesondere Transistoren umfasst, in der der sowohl zur generatorischen Dämpfung der Flügelbewegungen als auch zur Feststellung des Flügels (12) und/oder zur elektromotorischen Notöffnung des Flügels (12) ansteuerbare Elektromotor (18) angeordnet ist und deren elektronische Schalter (68) über eine Steuer- und/oder Regeleinheit (42) der Steuer- und/oder Regelelektronik (22) so ansteuerbar sind, dass der Elektromotor (18) zur generatorischen Dämpfung der Flügelbewegungen als Generator betreibbar bzw. zur Feststellung und/oder zur elektromotorischen Notöffnung des Flügels (12) eine durch die externe elektrische Energie gelieferte Spannung an dessen Motorklemmen (46) anlegbar ist.

8. Anlage nach Anspruch 7,
**dadurch gekennzeichnet, dass** die elektronischen Schalter (68) der H-Brücke über die Steuer- und/oder Regeleinheit (42) so ansteuerbar sind, dass bei seine insbesondere vorgebare Feststellposition einnehmendem Flügel (12) und anliegendem externen Steuersignal (34) zur Feststellung und/oder zur elektromotorischen Notöffnung des Flügels (12) an die Motorklemmen (46) des Elektromotors (18) eine durch die externe elektrische Energie gelieferte Spannung angelegt wird.

9. Anlage nach Anspruch 7 oder 8,
**dadurch gekennzeichnet, dass** die elektronischen Schalter (68) der H-Brücke über die Steuer- und/oder Regeleinheit (42) zur Feststellung des Flügels (12) in Abhängigkeit von der Richtung des Moments des mechanischen Energiespeichers (16) und/oder zur Notöffnung des Flügels in Abhängigkeit von der Drehrichtung des Flügels ansteuerbar sind.

10. Anlage nach zumindest einem der vorstehenden Ansprüche,
**dadurch gekennzeichnet, dass** die Umschalteinheit (48) über die zugeordnete Steuer- und/oder Regeleinheit (42) der Steuer- und/oder Regelelektronik (22) zur Feststellung des Flügels (12) so ansteuerbar ist, dass die dem Elektromotor (18) zugeführte elektrische Energie gerade ausreicht, um die potentielle Energie des mechanischen Energiespeichers (16) zu kompensieren.

11. Anlage nach zumindest einem der vorstehenden Ansprüche,
**dadurch gekennzeichnet, dass** über die zur Ansteuerung der Umschalteinheit (48) vorgesehene Steuer- und/oder Regeleinheit (42) zur Feststellung des Flügels (12) in der insbesondere vorgebbaren Feststellposition und/oder zum Offenhaltung des Flügels (12) nach erfolgter Notöffnung eine bistabile Feststelleinheit (72) ansteuerbar ist.

12. Anlage nach Anspruch 11,
**dadurch gekennzeichnet, dass** die bistabile Feststelleinheit (72) eine bistabile Bremseinheit zur Beaufschlagung der Motorwelle (20) des Elektromotors (18) umfasst.

13. Anlage nach Anspruch 11 oder 12,
**dadurch gekennzeichnet, dass** die bistabile Feststelleinheit (72) bei einem Alarm wie insbesondere im Brandfall über die Steuer- und/oder Regeleinheit (42) entriegelbar ist.

14. Anlage nach zumindest einem der vorstehenden Ansprüche,
**dadurch gekennzeichnet, dass** die Feststellposition als Parameter über eine Inbetriebnahmeeinheit oder dergleichen variabel einstellbar ist.

15. Anlage nach zumindest einem der vorstehenden Ansprüche,
**dadurch gekennzeichnet, dass** der Flügel (12) zumindest oberhalb eines vorgebbaren Öffnungswinkels bei Erreichen eines jeweiligen Öffnungswinkels feststellbar ist.

16. Anlage nach zumindest einem der vorstehenden Ansprüche,
**dadurch gekennzeichnet, dass** die Feststellung des Flügels (12) in einer jeweiligen Feststellposition durch manuelle Betätigung des Flügels (12) lösbar ist.

17. Anlage nach Anspruch 16,
**dadurch gekennzeichnet, dass** die zum manuellen Auslösen der Feststellung benötigte Kraft parametrisierbar ist.

18. Anlage nach zumindest einem der vorstehenden Ansprüche,
**dadurch gekennzeichnet, dass** bei einem jeweiligen Feststellwinkel, der kleiner ist als der maximale Öffnungswinkel des Flügels (12), der Feststellwinkel auch überfahrbar ist, so dass der Flügel (12) insbesondere manuell aus der Feststellung gelöst und über die betreffende Feststellposition hinaus geöffnet werden kann.

19. Anlage nach zumindest einem der vorstehenden Ansprüche,
**dadurch gekennzeichnet, dass** der Antrieb (14) eine insbesondere über die externe Einrichtung (24) mit externer elektrischer Energie versorgbare Sicherheitssensorik umfasst.

20. Anlage nach Anspruch 19,
**dadurch gekennzeichnet, dass** die Sicherheitssensorik wenigstens einen Sensor zur Überwachung des Bereichs in Schließrichtung vor dem Flügel (12) auf der Bandgegenseite und/oder wenigstens einen Sensor zur Überwachung des Bereichs in Öffnungsrichtung vor dem Flügel (12) auf der Bandseite umfasst.

21. Anlage nach Anspruch 19 oder 20,
**dadurch gekennzeichnet, dass** ein jeweiliges Auslösen einer Feststellung und/oder die Aktivierung einer jeweiligen Feststellung und/oder die Dämpfung einer jeweiligen Öffnungsbewegung des Flügels (12) über die Steuer- und/oder Regelelektronik (22) in Abhängigkeit von Ausgangssignalen der Sicherheitssensorik erfolgt.

22. Anlage nach zumindest einem der vorstehenden Ansprüche,
**dadurch gekennzeichnet, dass** bei einer zweiflügeligen Tür mit einem Standflügel und einem Gangflügel insbesondere für eine elektrische Schließfolgeregelung beiden Flügeln (12) jeweils wenigstens ein zur Feststellung des Flügels (12) bei einer insbesondere vorgebaren Feststellposition und/oder zur elektromotorischen Notöffnung des Flügels ansteuerbarer Elektromotor (18) zugeordnet ist.

23. Anlage nach Anspruch 22,
**dadurch gekennzeichnet, dass** zumindest dem Gangflügel insbesondere über die externe Einrichtung (24) externe elektrische Energie zuführbar ist.

24. Anlage nach einem der vorhergehenden Anspürche, **dadurch gekennzeichnet,**
**dass** der zur Aufladung des elektrischen Energiespeichers vorgesehene, als Generator betreibbare Elektromotor, und der zur Dämpfung der Flügelbewegungen und zur Feststellung und/oder Notöffnung vorgesehene Elektromotor als ein Elektromotor oder als getrennte Elektromotoren ausgebildet sind.

25. System mit
einer Anlage nach einem der Ansprüche 1 bis 24, und
einer externen Einrichtung (24), wie insbesondere einer Rauchschaltzentrale, einer Rauch- und Wärmeabzugszentrale oder dergleichen, die mit der Anlage (10) elektrisch verbunden ist, um den zumindest einen Elektromotor (18) zur Feststellung und/oder Notöffnung des Flügels mit elektrischer Energie zu versorgen.

## Claims

1. Installation for holding and/or emergency opening of a leaf (12) of a door, a window or the like, comprising a drive (14) with at least one mechanical energy store (16) which is charged by an opening movement of the leaf (12) and discharged with a closing movement of the leaf (12), comprising at least one electric motor (18), the motor shaft (20) of which is operatively connected to the leaf (12), and comprising an open-loop and/or closed-loop electronics system (22) for actuating the electric motor (18), wherein the electric motor (18) can be actuated by means of the open-loop and/or closed-loop electronics system (22) both for generator damping of the leaf movements and also against the force of the mechanical storage device (16) for holding of the leaf (12) and/or for electromotive emergency opening of the leaf by way of the electric motor (18) additionally being able to be supplied with external electrical energy from an external device (24), such as in particular a smoke switch control centre, a smoke and heat exhaust control centre or the like, for holding and/or emergency opening of the leaf, and wherein the drive (14) comprises an electrical energy store which can be charged by means of an electric motor (38), which is operatively connected to the leaf (12) by means of its motor shaft (36) and can be operated as a generator, and can be supplied with energy by means of the open-loop and/or closed-loop control electronics system (22); wherein the open-loop and/or closed-loop control electronics system (22) comprises a damping circuit (40) with at least one switching element (44) which can be actuated by means of an open-loop and/or closed-loop control unit (42) and by means of which the motor terminals (46) of the electric motor (18), which is connected to the electrical damping circuit (40), can be shorted for generator damping of the leaf movements; **characterized in that** the electric motor (18) is actuated by means of the open-loop and/or closed-loop control electronics system (22) depending on an external control signal (34), which is formed by an output signal from the external device (24), for holding and/or emergency opening of the leaf (12) and supplied with the external electrical energy via the external control signal (34), and **in that** the open-loop and/or closed-loop control electronics system (22) comprises a switchover unit (48) which can be switched over between a first switching state, in which the motor terminals (46) of the electric motor (18) are connected to the electrical damping circuit (40) for generator damping of the leaf movements, and a second switching state, in which the motor terminals (46) of the electric motor (18) are connected to a voltage (50), supplied by the external electrical energy, for holding of the leaf (12) in an, in particular predefinable, holding position and/or for electromotive emergency opening of the leaf (12).

2. Installation according to Claim 1, **characterized in that** the electric motor (18) for holding and/or for electromotive emergency opening of the leaf (12) is a brushless DC motor, as a result of which the leaf (12) can already be held by applying an electric voltage to at least one motor winding.

3. Installation according to Claim 1, **characterized in that** the switchover unit (48), for holding of the leaf (12), assumes its second switching state when the leaf (12) assumes the, in particular predefinable, holding position and the external control signal (34) is applied to the open-loop and/or closed-loop control electronics system (22).

4. Installation according to at least one of the preceding claims, **characterized in that** the switchover unit (48) comprises a relay by means of which, in the unenergized state, the motor terminals (46) of the electric motor (18) can be connected to the electrical damping circuit (40) for generator damping of the leaf movements and by means of which, in the energized state, the terminals (46) of the electric motor (18) can be connected to a voltage (50) provided by the external electrical energy for holding and/or for electromotive emergency opening of the leaf (12).

5. Installation according to at least one of the preceding claims, **characterized in that** the external control signal (34) can be supplied to the switchover unit (48) by means of a position switch (52) which can be closed in the case of the leaf (12) assuming the, in particular predefinable, holding position, and/or a level adjustment unit (54) is provided for generating the voltage (50) which is to be applied to the electric motor (18) for holding and/or for electromotive emergency opening of the leaf (12), by means of which level adjustment unit the level of the external control signal (34) can be adjusted to the level required for supplying voltage to the electric motor (18).

6. Installation according to any of Claims 1 to 4, **characterized in that** the external control signal (34) can be supplied to the switchover unit (48) by means of an open-loop and/or closed-loop control unit (64) of the open-loop and/or closed-loop control electronics system (22) depending on the output signal (66) from a position sensor (56) detecting the, in particular predefinable, holding position of the leaf (12), and/or the external control signal (34) can be supplied to the electric motor (18), for level adjustment, by means of such an open-loop and/or closed-loop control unit (64) of the open-loop and/or closed-loop control electronics system (22) for generating the voltage which is to be applied to the electric motor (18) for holding and/or for electromotive emergency opening of the leaf (12).

7. Installation according to at least one of the preceding claims, **characterized in that** the switchover unit (48) comprises an H-bridge which can be acted on by the external control signal (34) and is composed of electronic switches (68), such as in particular transistors, in which H-bridge the electric motor (18) which can be actuated both for generator damping of the leaf movements and for holding of the leaf (12) and/or for electromotive emergency opening of the leaf (12) is arranged, and the electronic switches (68) of which H-bridge can be actuated by means of an open-loop and/or closed-loop control unit (42) of the open-loop and/or closed-loop control electronics system (22) such that the electric motor (18) can be operated as a generator for generator damping of the leaf movements or a voltage which is supplied by the external electrical energy can be applied to the motor terminals (46) of the electric motor for holding and/or for electromotive emergency opening of the leaf (12).

8. Installation according to Claim 7, **characterized in that** the electronic switches (68) of the H-bridge can be actuated by means of the open-loop and/or closed-loop control unit (42) such that a voltage which is supplied by the external electrical energy is applied to the motor terminals (46) of the electric motor (18) in the case of the leaf (12) assuming its, in particular predefinable, holding position and an applied external control signal (34) for holding and/or for electromotive emergency opening of the leaf (12).

9. Installation according to Claim 7 or 8, **characterized in that** the electronic switches (68) of the H-bridge can be actuated by means of the open-loop and/or closed-loop control unit (42) for holding the leaf (12) depending on the direction of the torque of the mechanical energy store (16) and/or for emergency opening of the leaf depending on the direction of rotation of the leaf.

10. Installation according to at least one of the preceding claims, **characterized in that** the switchover unit (48) can be actuated by means of the associated open-loop and/or closed-loop control unit (42) of the open-loop and/or closed-loop electronics system (22) for holding of the leaf (12) such that the electrical energy supplied to the electric motor (18) is already sufficient to compensate for the potential energy of the mechanical energy store (16).

11. Installation according to at least one of the preceding claims, **characterized in that** a bistable holding unit (72) can be actuated by means of the open-loop and/or closed-loop control unit (42) which is provided for actuating the switchover unit (48) for holding of the leaf (12) in the, in particular predefinable, holding position and/or for holding open of the leaf (12) after emergency opening has been performed.

12. Installation according to Claim 11, **characterized in that** the bistable holding unit (72) comprises a bistable brake unit for acting on the motor shaft (20) of the electric motor (18).

13. Installation according to Claim 11 or 12, **characterized in that** the bistable holding unit (72) can be unlocked by means of the open-loop and/or closed-loop control unit (42) in the event of an alarm, such as in particular in the event of fire.

14. Installation according to at least one of the preceding claims, **characterized in that** the holding position, as a parameter, can be variably adjusted by means of a start-up unit or the like.

15. Installation according to at least one of the preceding claims, **characterized in that** the leaf (12) can be held at least above a predefinable opening angle when a respective opening angle is reached.

16. Installation according to at least one of the preceding claims, **characterized in that** holding of the leaf (12) in a respective holding position can be released by manual operation of the leaf (12).

17. Installation according to Claim 16, **characterized in that** the force required for manually releasing the holding can be parameterized.

18. Installation according to at least one of the preceding claims, **characterized in that**, in the case of a respective holding angle which is smaller than the maximum opening angle of the leaf (12), the holding angle can also be exceeded, so that the leaf (12) can be released, in particular manually, from being held and can be opened beyond the holding position concerned.

19. Installation according to at least one of the preceding claims, **characterized in that** the drive (14) comprises a safety sensor system which can be supplied with external electrical energy in particular by means of the external device (24).

20. Installation according to Claim 19, **characterized in that** the safety sensor system comprises at least one sensor for monitoring the region in front of the leaf (12) in the closing direction on the side opposite the hinge and/or at least one sensor for monitoring the region in front of the leaf (12) in the opening direction on the hinge side.

21. Installation according to Claim 19 or 20, **characterized in that** respective release of holding and/or activation of respective holding and/or damping of a respective opening movement of the leaf (12) are/is performed by means of the open-loop and/or closed-loop control electronics system (22) depending on output signals from the safety sensor system.

22. Installation according to at least one of the preceding claims, **characterized in that**, in the case of a two-leaf door with a stationary leaf and a moving leaf, in particular for electrical closing sequence control, in each case at least one electric motor (18) which can be actuated for holding the leaf (12) in an, in particular predefinable, holding position and/or for electromotive emergency opening of the leaf is associated with the two leaves (12).

23. Installation according to Claim 22, **characterized in that** external electrical energy can be supplied at least to the moving leaf, in particular by means of the external device (24).

24. Installation according to any of the preceding claims, **characterized in that** the electric motor which is provided for charging the electrical energy store and can be operated as a generator, and the electric motor which is provided for damping the leaf movements and for holding and/or emergency opening are designed as one electric motor or as separate electric motors.

25. System comprising an installation according to any of Claims 1 to 24, and an external device (24), such as in particular a smoke switch control centre, a smoke and heat exhaust control centre or the like, which is electrically connected to the installation (10) in order to supply the at least one electric motor (18) for holding and/or emergency opening of the leaf with electrical energy.

## Revendications

1. Installation de blocage et/ou d'ouverture d'urgence d'un battant (12) d'une porte, d'une fenêtre ou similaires, comprenant un dispositif d'entraînement (14) pourvu d'au moins un accumulateur d'énergie mécanique (16) qui se charge par un mouvement d'ouverture du battant (12) et qui se décharge par un mouvement de fermeture du battant (12), au moins un moteur électrique (18) dont l'arbre moteur (20) est en relation active avec le battant (12), et une électronique de commande et/ou de régulation (22) pour piloter le moteur électrique (18), dans laquelle le moteur électrique (18) peut être piloté par l'intermédiaire de l'électronique de commande et/ou de régulation (22) à la fois pour l'amortissement en mode générateur des mouvements de battant et à l'encontre de la force de l'accumulateur mécanique (16) pour le blocage du battant (12) et/ou l'ouverture d'urgence électromotrice du battant, en ce que pour le blocage et/ou l'ouverture d'urgence du battant, le moteur électrique (18) peut en outre être alimenté en énergie électrique externe à partir d'un dispositif externe (24), tel qu'en particulier d'un central de fumée, d'un poste d'extraction de fumée et de chaleur ou similaires, et dans laquelle le dispositif d'entraînement (14) comprend un accumulateur d'énergie électrique qui peut être rechargé par un moteur électrique (38) en relation active avec le battant (12) par le biais de son arbre de moteur (36), pouvant fonctionner en mode générateur et pouvant être alimenté en énergie par l'électronique de commande et/ou de régulation (22) ; dans laquelle l'électronique de commande et/ou de régulation (22) comprend un circuit d'amortissement (40) avec au moins un élément de commutation (44) pouvant être piloté par une unité de commande et/ou de régulation (42) et permettant de court-circuiter les bornes moteur (46) du moteur électrique (18) connecté au circuit électrique d'amortissement (40) pour l'amortissement en mode générateur des mouvements de battant ;
**caractérisée en ce que** le moteur électrique (18) est piloté par l'électronique de commande et/ou de régulation (22) en fonction d'un signal de commande externe (34) formé par un signal de sortie du dispositif externe (24) pour le blocage et/ou l'ouverture d'urgence du battant (12), et est alimenté en énergie électrique externe par le signal de commande externe (34), et **en ce que** l'électronique de commande et/ou de régulation (22) comprend une unité de commutation (48) qui peut commuter entre un premier état de commutation dans lequel les bornes moteur (46) du moteur électrique (18) sont reliées au circuit électrique d'amortissement (40) pour l'amortissement en mode générateur des mouvements de battant et un deuxième état de commutation dans lequel les bornes moteur (46) du moteur électrique (18) sont appliquées à une tension (50) fournie par l'énergie électrique externe pour le blocage du battant (12) dans une position de blocage, en particulier prédéfinissable, et/ou pour l'ouverture d'urgence électromotrice du battant (12).

2. Installation selon la revendication 1, **caractérisée en ce que** le moteur électrique (18) pour le blocage et/ou pour l'ouverture d'urgence électromotrice du battant (12) est un moteur à courant continu sans balai, de sorte que le battant (12) peut déjà être bloqué par l'application d'une tension électrique à au moins un enroulement de moteur.

3. Installation selon la revendication 1, **caractérisée en ce que** l'unité de commutation (48) adopte son deuxième état de commutation pour le blocage du battant (12) lorsque le battant (12) occupe la position de blocage, en particulier prédéfinissable, et le signal de commande externe (34) est appliqué à l'électronique de commande et/ou de régulation (22).

4. Installation selon au moins l'une des revendications précédentes, **caractérisée en ce que** l'unité de commutation (48) comprend un relais par lequel à l'état non alimenté les bornes moteur (46) du moteur électrique (18) peuvent être reliées au circuit électrique d'amortissement (40) pour l'amortissement en mode générateur des mouvements de battant, et par lequel à l'état alimenté les bornes (46) du moteur électrique (18) peuvent être appliquées à une tension (50) fournie par l'énergie électrique externe pour le blocage et/ou pour l'ouverture d'urgence électromotrice du battant (12).

5. Installation selon au moins l'une des revendications précédentes, **caractérisée en ce que** le signal de commande externe (34) peut être amené à l'unité de commutation (48) par un commutateur de position (52) qui peut être fermé lorsque le battant (12) adopte la position de blocage, en particulier prédéfinissable, et/ou pour produire la tension (50) à appliquer au moteur électrique (18) pour le blocage et/ou l'ouverture d'urgence électromotrice du battant (12), une unité d'adaptation de niveau (54) est prévue par laquelle le niveau du signal de commande externe (34) peut être adapté au niveau nécessaire à l'alimentation en tension du moteur électrique (18).

6. Installation selon l'une quelconque des revendications 1 à 4, **caractérisée en ce que** le signal de commande externe (34) peut être amené à l'unité de commutation (48) par une unité de commande et/ou de régulation (64) de l'électronique de commande et/ou de régulation (22) en fonction du signal de sortie (66) d'un codeur de position (56) détectant la position de blocage, en particulier prédéfinissable, du battant (12), et/ou pour produire la tension à appliquer au moteur électrique (18) pour le blocage et/ou pour l'ouverture d'urgence électromotrice du battant (12), le signal de commande externe (34) peut être amené au moteur électrique (18) pour l'adaptation de niveau par une telle unité de commande et/ou de régulation (64) de l'électronique de commande et/ou de régulation (22).

7. Installation selon au moins l'une des revendications précédentes, **caractérisée en ce que** l'unité de commutation (48) comprend un pont en H pouvant être soumis au signal de commande externe (34) et composé de commutateurs électroniques (68), comme en particulier de transistors, dans lequel est disposé le moteur électrique (18) pouvant être piloté à la fois pour l'amortissement en mode générateur des mouvements de battant et pour le blocage du battant (12) et/ou pour l'ouverture d'urgence électromotrice du battant (12), et dont les commutateurs électroniques (68) peuvent être pilotés par une unité de commande et/ou de régulation (42) de l'électronique de commande et/ou de régulation (22) de telle sorte que le moteur électrique (18) peut fonctionner en mode générateur pour l'amortissement en mode générateur des mouvements de battant, ou une tension fournie par l'énergie électrique externe peut être appliquée à ses bornes moteur (46) pour le blocage et/ou pour l'ouverture d'urgence électromotrice du battant (12).

8. Installation selon la revendication 7, **caractérisée en ce que** les commutateurs électroniques (68) du pont en H peuvent être pilotés par l'unité de commande et/ou de régulation (42) de telle sorte qu'une tension fournie par l'énergie électrique externe est appliquée lorsque le battant (12) adopte sa position de blocage, en particulier prédéfinissable, et le signal de commande externe (34) pour le blocage et/ou pour l'ouverture d'urgence électromotrice du battant (12) est appliqué aux bornes moteur (46) du moteur électrique (18).

9. Installation selon la revendication 7 ou 8, **caractérisée en ce que** les commutateurs électroniques (68) du pont en H peuvent être pilotés par l'unité de commande et/ou de régulation (42) pour le blocage du battant (12) en fonction du sens du moment de l'accumulateur d'énergie mécanique (16) et/ou pour l'ouverture d'urgence du battant en fonction du sens de rotation du battant.

10. Installation selon au moins l'une des revendications précédentes, **caractérisée en ce que** l'unité de commutation (48) peut être pilotée par l'unité de commande et/ou de régulation (42) associée de l'électronique de commande et/ou de régulation (22) pour le blocage du battant (12) de telle sorte que l'énergie électrique amenée au moteur électrique (18) suffit tout juste pour compenser l'énergie potentielle de l'accumulateur d'énergie mécanique (16).

11. Installation selon au moins l'une des revendications précédentes, **caractérisée en ce qu'**une unité de blocage bistable (72) peut être pilotée par l'unité de commande et/ou de régulation (42) prévue pour le pilotage de l'unité de commutation (48) pour le blocage du battant (12) dans la position de blocage, en particulier prédéfinissable, et/ou pour le maintien de l'ouverture du battant (12) après une ouverture d'urgence effectuée.

12. Installation selon la revendication 11, **caractérisée en ce que** l'unité de blocage bistable (72) comprend une unité de freinage bistable pour solliciter l'arbre moteur (20) du moteur électrique (18).

13. Installation selon la revendication 11 ou 12, **caractérisée en ce que** l'unité de blocage bistable (72) peut être déverrouillée en cas d'alarme, comme en particulier en cas d'incendie, par l'unité de commande et/ou de régulation (42).

14. Installation selon au moins l'une des revendications précédentes, **caractérisée en ce que** la position de blocage est réglable de manière variable en tant que paramètre par une unité de mise en service ou similaires.

15. Installation selon au moins l'une des revendications précédentes, **caractérisée en ce que** le battant (12) peut être bloqué au moins au-dessus d'un angle d'ouverture prédéfinissable lorsqu'un angle d'ouverture respectif est atteint.

16. Installation selon au moins l'une des revendications précédentes, **caractérisée en ce que** le blocage du battant (12) dans une position de blocage respective peut être libéré par l'actionnement manuel du battant (12).

17. Installation selon la revendication 16, **caractérisée en ce que** la force nécessaire au déclenchement manuel du blocage peut être paramétrée.

18. Installation selon au moins l'une des revendications précédentes, **caractérisée en ce que** pour un angle de blocage respectif qui est inférieur à l'angle d'ouverture maximal du battant (12), l'angle de blocage peut aussi être dépassé de sorte que le battant (12) peut être libéré, en particulier manuellement, du blocage et ouvert au-delà de la position de blocage concerné.

19. Installation selon au moins l'une des revendications précédentes, **caractérisée en ce que** le dispositif d'entraînement (14) comprend un système de capteurs de sécurité pouvant être alimenté en énergie électrique externe, en particulier par le dispositif externe (24).

20. Installation selon la revendication 19, **caractérisée en ce que** le système de capteurs de sécurité comprend au moins un capteur pour surveiller la zone dans la direction de fermeture devant le battant (12) sur le côté opposé aux charnières et/ou au moins un capteur pour surveiller la zone dans la direction d'ouverture devant le battant (12) du côté des charnières.

21. Installation selon la revendication 19 ou 20, **caractérisée en ce qu'**un déclenchement respectif d'un blocage et/ou l'activation d'un blocage respectif et/ou l'amortissement d'un mouvement d'ouverture respectif du battant (12) est effectué par l'électronique de commande et/ou de régulation (22) en fonction de signaux de sortie du système de capteurs de sécurité.

22. Installation selon au moins l'une des revendications précédentes, **caractérisée en ce que** sur une porte à deux battants avec un battant fixe et un battant mobile, en particulier pour une régulation de séquence de fermeture électrique, respectivement au moins un moteur électrique (18) pouvant être piloté pour le blocage du battant (12) dans une position de blocage, en particulier prédéfinissable, et/ou pour l'ouverture d'urgence électromotrice du battant est associé aux deux battants (12) .

23. Installation selon la revendication 22, **caractérisée en ce que** de l'énergie électrique externe peut être amenée au moins au battant mobile, en particulier par le dispositif externe (24).

24. Installation selon l'une quelconque des revendications précédentes, **caractérisée en ce que** le moteur électrique pouvant fonctionner en mode générateur, prévu pour la recharge de l'accumulateur d'énergie électrique, et le moteur électrique, prévu pour l'amortissement des mouvements de battant et pour le et/ou l'ouverture d'urgence, sont réalisés sous forme de moteur électrique ou de moteurs électriques séparés.

25. Système, comprenant une installation selon l'une quelconque des revendications 1 à 24, et un dispositif externe (24), comme en particulier un central de fumée, un poste d'extraction de fumée et de chaleur ou similaires, qui est relié électriquement à l'installation (10) pour alimenter ledit au moins un moteur électrique (18) en énergie électrique pour le blocage et/ou l'ouverture d'urgence du battant.
